Europäisches Patentamt

European Patent Office

Office européen des brevets

(11) Veröffentlichungsnummer: **0 307 442 B1**

# EUROPÄISCHE PATENTSCHRIFT

(45) Veröffentlichungstag der Patentschrift: **02.06.93**

(51) Int. Cl.⁵: **B23K 9/24**, B23K 9/09

(21) Anmeldenummer: **88902852.8**

(22) Anmeldetag: **31.03.88**

(86) Internationale Anmeldenummer:
**PCT/EP88/00280**

(87) Internationale Veröffentlichungsnummer:
**WO 88/07430 (06.10.88 88/22)**

(54) **VERFAHREN UND VORRICHTUNG ZUR REGELUNG VON WIDERSTANDS- ODER LICHTBOGEN-SCHWEISSVORGÄNGEN.**

(30) Priorität: **31.03.87 DE 3710727**

(43) Veröffentlichungstag der Anmeldung:
**22.03.89 Patentblatt 89/12**

(45) Bekanntmachung des Hinweises auf die
Patenterteilung:
**02.06.93 Patentblatt 93/22**

(84) Benannte Vertragsstaaten:
**BE DE FR GB IT**

(56) Entgegenhaltungen:
**EP-A- 0 129 963
EP-A- 0 153 298
EP-A- 0 184 562
DE-A- 3 301 039
US-A- 4 103 141**

**Automatic Welding, Band 39, Nr. 3, März 1986, (Abington, Cambridge, GB) N.V. Podola et al.: "An automatic system based on an Elektronika -60 microcomputer for experimental research into microspot welding",**

Seiten 34-38

(73) Patentinhaber: **MATUSCHEK, Ulrich
Sperberweg 8
W-5100 Aachen(DE)**

Patentinhaber: **ZIMMERMANN, Martin
Mauerstrasse 94
W-5100 Aachen(DE)**

(72) Erfinder: **MATUSCHEK, Ulrich
Sperberweg 8
W-5100 Aachen(DE)**
Erfinder: **ZIMMERMANN, Martin
Mauerstrasse 94
W-5100 Aachen(DE)**

(74) Vertreter: **Freischem, Werner, Dipl.-Ing.
An Gross St. Martin 2
W-5000 Köln 1 (DE)**

**Beschreibung**

Die Erfindung geht aus von einem Verfahren zur Regelung von Widerstands-Schweißvorgängen, bei dem durch Messen der Stromstärke des Schweißstromes und der Spannung an den Schweißelektroden der dynamische Widerstand des zu verschweißenden Werkstücks während des Schweißvorganges bestimmt, abgespeichert und im Vergleich mit einer empirisch ermittelten Stell- oder Führungsgröße ausgewertet wird.

Bei Verfahren und Geräten mit Messung des dynamischen Widerstandes wird während des Schweißvorganges der Widerstand des Werkstückes wiederholt ermittelt und mit der zu erwartenden Güte der Verbindung in Beziehung gesetzt. Aufgrund des geringen meßtechnischen Aufwandes - es werden nur physikalische Größen (Spannung und Strom) gemessen, die beim Punktschweißen mit abfallen - wird dieses Verfahren zur Punktschweißregelung bevorzugt benutzt. Bei allen bisher bekannten Regelverfahren dieser Art werden aus jeweils einer halben oder ganzen Schweißperiode besonders ausgezeichnete Größen bestimmt, wie zum Beispiel der Widerstand zum Zeitpunkt des Strommaximums oder eine widerstandsähnliche Größe, die sich aus dem Quotienten von integrierter Spannung zu integriertem Strom (Methode MIACHY) ergibt. Der Verlauf dieser ausgezeichneten Größen über die gesamte Schweißzeit wird bestimmt, und bei Erreichen eines Abschaltkriteriums wird die Schweißung beendet. Die Abschaltkriterien werden empirisch ermittelt.

Diese bekannten Verfahren benutzen für die Regelung die Schweißzeit beziehungsweise die Anzahl der Schweißperioden je Schweißpunkt als Stellgröße. Auch die in den Schweißpunkt eingebrachte Energie, die sich durch den Phasenanschnitt der Primärspannung variieren läßt, kann als zusätzliche Stellgröße verwendet werden.

Aus der DE-A1-33 01 039 ist ein Verfahren bekannt, bei dem das der Schweißstelle zugeflossene Arbeitsintegral bestimmt wird, wobei innerhalb jeder Netzhalbperiode die Energiezufuhr zur Schweißstelle nach Erreichen eines einem Sollwert für die betreffende Netzhalbperiode entsprechenden Arbeitsintegrales abgeschaltet wird. Zum Steuern der elektrischen Arbeit werden vorzugsweise abschaltbare Thyristoren verwendet.

Aus der EP-A1-129 963 ist eine Methode zum Erfassen des Schmelzbeginns beim Widerstandspunktschweißen bekannt. Obwohl dabei durch kontinuierliches Messen von Schweißstrom und -spannung der Widerstandsverlauf ermittelt werden soll, handelt es sich um eine Aufnahme von Mittelwerten, bei denen z.B. die Meßlücken in den Strompausen zwischen den Schweißhalbwellen und hochfrequente Widerstandsverläufe nicht erfaßt werden. Es ist angegeben, daß mit dieser Methode auch regelnd eingegriffen werden kann. Die Regelung beschränkt sich jedoch auf ein Abschalten der Schweißung in Abhängigkeit von dem Verhältnis von nach Schmelzbeginn eingebrachter Energie zu Gesamtschweißenergie bzw. von dem Verhältnis von End-Schweißwiderstand zu maximalem Schweißwiderstand. Beide Regelkoeffizienten sind Größen, die erst am Ende der Schweißung zur Verfügung stehen.

Bei den bekannten Verfahren ist aufgrund unzureichender Informationsdichte und Informationsauswertung ein vorausschauendes Erkennen einer Störung im Schweißvorgang nicht möglich.

Um ein vorausschauendes Erkennen einer Störung zu ermöglichen, ist das erfindungsgemäße Verfahren dadurch gekennzeichnet, daß

die Meßwerte mit hoher zeitlicher Auflösung, z.B. mit 50.000 oder 100.000 Meßpunkten pro Sekunde, aufgenommen und abgespeichert werden,

aus diesen Meßwerten von Stromstärke und Spannung on-line die Auswirkung
der Schweißeinflußgröße Leistung
oder/und Energie
oder/und Ladungsmenge
oder/und Elektrodenspannung
oder/und Stromstärke
oder/und Zeit
auf den dynamischen Widerstand quantitativ (zahlenmäßig) bestimmt wird

und mit den entsprechenden, abgespeicherten Stell- oder Führungsgrößen einzeln oder in Kombination miteinander verglichen wird,

wobei die quantitativ erfaßten Auswirkungen der Schweißeinflußgrößen einer Schweißhalbperiode zur Regelung dieser Schweißhalbperiode oder einer der folgenden Schweißhalbperioden der gleichen Schweißung benutzt werden.

Bei dem Verfahren nach der Erfindung wird die Beurteilung der Güte der Schweißpunkte während einer Schweiß-Halbperiode sofort, das heißt "on-line", vorgenommen. Weil die quantitativ erfaßten Auswirkungen der Schweißeinflußgrößen als Stell- oder Führungsgrößen in hoher Dichte oder Auflösung erfaßt und auf ihre Charakteristika untersucht werden, läßt sich jeder Schweißvorgang so regeln, daß eine sich anbahnende

2

Störung vermieden wird.

Das Auftreten von Störungen, wie Spritzer, kündigt sich durch charakteristische Eckwerte der ausgewerteten Meßgrößen, die mit den abgespeicherten Stell- oder Führungsgrößen verglichen werden, so rechtzeitig an, daß durch Veränderung von Stromstärke oder Spannung bzw. durch Veränderung von Phasenanschnittswinkeln und damit bedingter Veränderung der Leistungszufuhr die Störung vermieden und der Schweißvorgang optimal beendet werden kann.

Das zur Durchführung dieses Verfahrens notwendige Gerät besteht aus einem Meßwertaufnehmer, einer Auswerteinheit und einer Stelleinheit. Der Meßwertaufnehmer detektiert mittels eines Stromsensors, z.B. ein Rogowski-Gürtel, und eines Spannungssensors den Schweißstrom und den über das Werkstück auftretenden Spannungsabfall, gemessen an den Schweißelektroden, digitalisiert die Meßwerte und speichert sie ab. Der Meßwertaufnehmer muß so schnell sein, daß er den zeitlichen Verlauf der Meßgrößen während einer Schweiß-Halbperiode mit genügender Genauigkeit aufzeichnen kann.

In der Auswerteinheit werden die abgespeicherten Meßwerte einer Schweißhalbperiode mittels eines schnellen Signalprozessors "on-line" ausgewertet. Dabei wird der genaue zeitliche Verlauf von Schweißstrom und Elektrodenspannung während einer Schweißhalbperiode auf seinen Informationsgehalt hin ausgewertet.

Der Auswertevorschrift liegt das folgende mathematisch-physikalische Modell zugrunde. Ausgangspunkt ist die Annahme einer funktionalen Abhängigkeit des Schweißstückwiderstandes während einer Schweißhalbperiode von anderen, ebenfalls aus Strom und Spannung ableitbaren Größen, wie zum Beispiel Leistung und Energie. Diese Annahme läßt eine mögliche Rückkopplung von Widerstand auf Einflußgrößen implizit zu. Die in den Schweißprozeß eingebrachte elektrische Leistung P übernimmt dabei die Funktion, die instantanen Abhängigkeiten des Widerstandes von den elektrischen Größen darzustellen. Die in den Schweißprozeß eingebrachte elektrische Energie E hat die Aufgabe, bevorzugt zeitverzögerte Abhängigkeiten zusammenzufassen und die elektrische und thermische Vorgeschichte des Schweißprozesses bzw. des Schweißpunktes zu berücksichtigen. Äußere Einflüsse, wie zum Beispiel die Elektrodenbewegung, verursacht durch schlechte Passungen oder durch Einsinken der Elektroden in das Werkstück, werden durch die explizite Zeitabhängigkeit beschrieben.

$$R(t) = R(P(t), E(t),t,..) \qquad (1)$$

Diese Gleichung beinhaltet eine Beschreibung der Widerstandsabhängigkeit aus heuristischen Überlegungen heraus und nicht eine in sich geschlossene, analytisch beschreibbare Modellvorstellung.

Aus diesem Ansatz werden Leistungs-, Energie- und Zeitparameter wie folgt bestimmt:

Da die funktionale Abhängigkeit des Widerstandes unbekannt ist, wird die Funktion in einer Reihe um die Nullpunkte der Zeit entwickelt.

$$R(t) = Rp*(P(t)-P(0))+Re*(E(t)-E(0))+Rt*(t) + Rpet,$$
$$= Rp*P(t) + Re*E(t) + Rt*t + Ro \qquad (2)$$

wobei Rp, Re, Rt partielle Ableitungen nach P, E, t an der Stelle P(0), E(0), t = 0 bedeuten.

Die Reihenentwicklung wird bis zu Termen erster Ordnung ausgeführt und die partiellen Ableitungen Rp, Re, Rt stellen in dieser Näherung das Maß für die Einflüsse von Leistung, Energie und Zeit auf den Widerstand dar. Im folgenden werden Rp, Re, Rt als Leistungs-, Energie- und Zeitkoeffizienten bezeichnet. Dieser Datensatz wird für jede Schweißhalbwelle mindestens einmal bestimmt. Bei mehrmaliger Bestimmung bezieht sich die Auswertung jedes Datensatzes auf ein entsprechend kleines Zeitintervall innerhalb der Schweißhalbperiode. Mittels dieser Datensätze wird die Regelung nach noch zu bestimmenden Eckwerten der Regelkoeffizienten durch Veränderung des Phasenanschnittwinkels der Primärspannung vorgenommen.

Es wurde festgestellt, daß beim Überschreiten bestimmter Eckwerte bei den Koeffizienten in der jeweils folgenden Schweißhalbwelle Spritzer auftraten. Diese Sensibilität der Koeffizienten wird dazu genutzt, die Schweißvorgänge, insbesondere das Punktschweißen, zu regeln.

Im folgenden sind die mathematischen Manipulationen der Meßwerte, die zur Bestimmung der Leistungs-, Energie- und Zeitkoeffizienten notwendig sind, dargestellt.

Innerhalb eines Auswertezeitraumes lassen sich die Verläufe von Widerstand und Einflußgrößen durch Polynome darstellen, deren Koeffizienten aus den Meßwertefeldern mittels eines geeigneten Verfahrens zu ermitteln sind.

Möge der Widerstand als Funktion der Zeit durch ein Polynom 3. Grades dargestellt werden, so sind wegen der als linear betrachteten Abhängigkeit, dessen Einflußgrößen ebenfalls als Funktion der Zeit durch Polynome maximal 3. Grades darzustellen.

Seien

E0,E1,E2,E3 die Koeffizienten des Energiepolynoms
P0,P1,P2,(P3) die Koeffizienten des Leistungspolynoms
R0,R1,R2,R3 die Koeffizienten des Widerstandspolynoms

$$E(t) = E0 + E1 * t + E2*t\hat{~}2 + E3*t\hat{~}3$$
$$P(t) = P0 + P1 * t + P2*t\hat{~}2 + P3*t\hat{~}3$$
$$R(t) = R0 + R1 * t + R2*t\hat{~}2 + R3*t\hat{~}3 \qquad (3),$$

so führt (2) durch Einsetzen von (3) auf ein Gleichungssystem zur Bestimmung von Energie-, Leistung- und Zeitkoeffizienten und Konstantterm Ro, unter Ausnutzung der linearen Unabhängigkeit der Zeitfunktionen $1, t, t\hat{~}2, t\hat{~}3$:

$$R(t) = Rp*P(t) + Re*E(t) + Rt*t + Ro$$
$$R0 = Rp*P0 + Re*E0 + Ro$$
$$R1 = Rp*P1 + Re*E1 + Rt$$
$$R2 = Rp*P2 + Re*E2$$
$$R3 = Rp*P3 + Re*E3 \qquad (4),$$

Die Auflösung dieses Gleichungssystems von vier Gleichungen zu vier Unbekannten führt auf die Gewinnung der Regelkoeffizienten Rp, Re, Rt, Ro.

Auch bei einer anderen Wahl nicht linear abhängiger Einflußgrößen gelangt man zu einem Gleichungssystem, dessen Auflösung gesuchte Regelkoeffizienten liefern.

Das hier erläuterte Verfahren setzt den Komplexitätsgrad des Widerstandsverlaufes (z.B. Polynom 3. Grades) direkt mit der Anzahl der Einflußgrößen (z.B. 3) in Beziehung.

Sinnvollerweise wird der Widerstandsverlauf durch ein Polynom, dessen Grad nicht höher ist als die Anzahl der linear unabhängig angenommenen Einflußgrößen, approximiert.

Auf diese Weise erfolgt eine Reduktion des Widerstandsverlaufes auf jenen Anteil, der sich als eine Reaktion von aus elektrischen Größen ableitbaren Einflußgrößen erklären läßt.

Die Zeichnungen zeigen in

Fig. 1 Datei original U (t)
Fig. 2 Datei original dI(t)
Fig. 3 Datei Strom I(t)
Fig. 4 Datei Leistung P(t)
Fig. 5 Datei Widerstand R(t) und
Fig. 6 Datei Widerstand-fit R(t) für vier Schweißperioden bzw. acht Schweißhalbperioden.

Alle diese Kurven erstrecken sich über eine Zeit t von vier Schweißperioden, d.h. bei einem Wechselstrom von 50 Hertz. über 80 Millisekunden. Diese sind in viertausend Meßpunkte unterteilt.

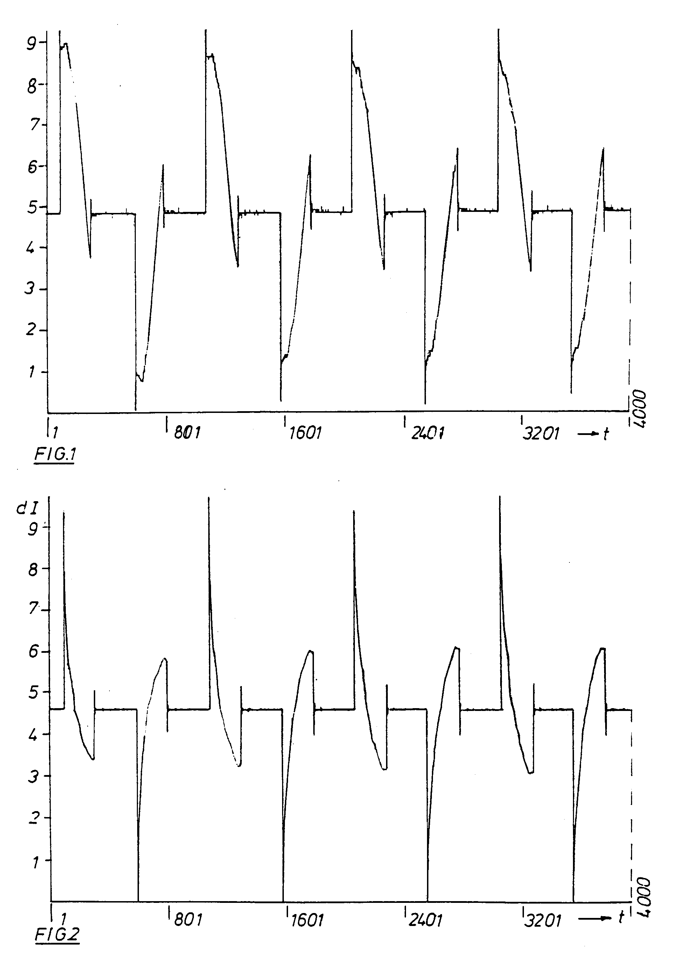

Die Fig. 1 und 2 zeigen in relativen Größen den Verlauf der gemessenen Spannung U(t) und der gemessenen Stromstärke dI.

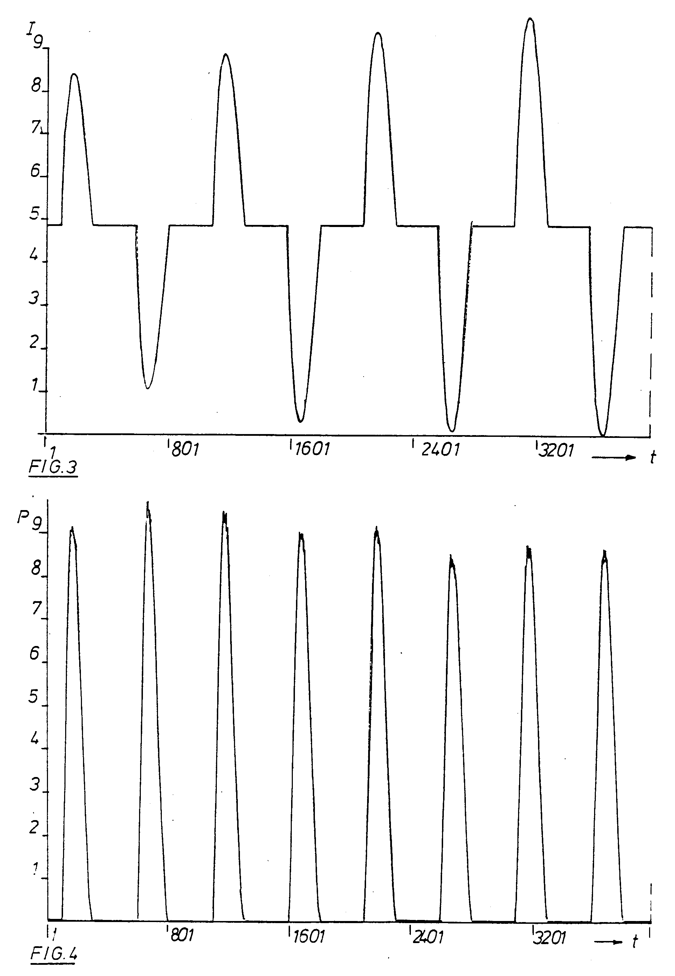

Fig. 3 zeigt den Verlauf des Schweißstromes I(t) = Integral von dI gemäß Fig. 2.

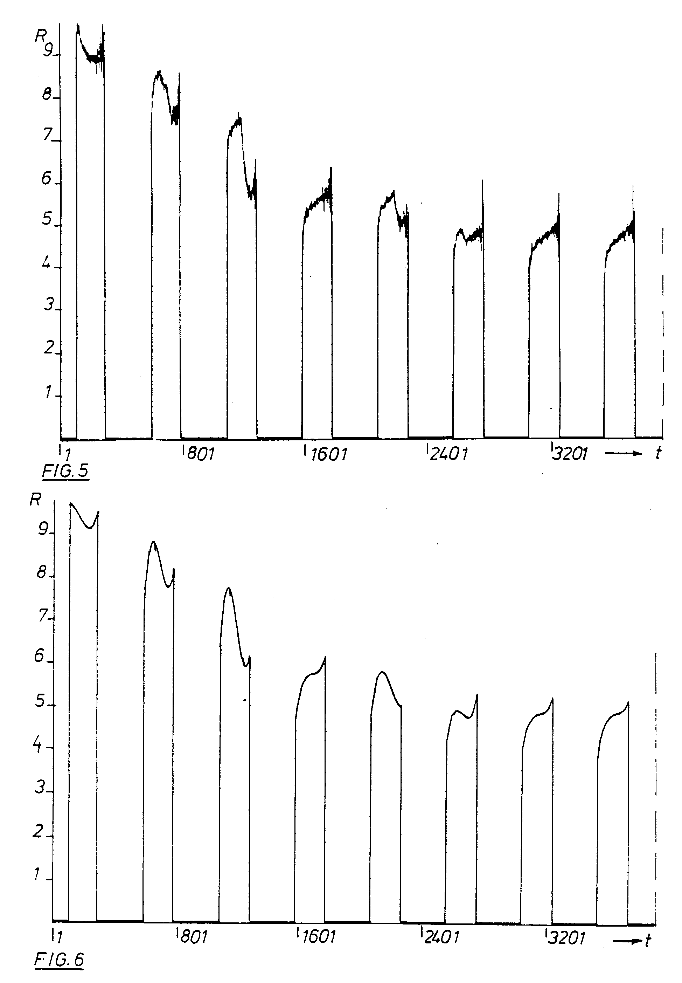

Fig. 4 zeigt den Verlauf der Leistung P(t), der aus den Meßwerten der korrigierten Elektrodenspannung U(t) und den Werten des Schweißstromes I(t) gemäß Fig. 3 durch Produktbildung U(t) * I(t) ermittelt ist.

Fig. 5 zeigt den Verlauf des Widerstandes R(t), der aus den korrigierten Meßwerten der Elektrodenspannung U(t) und den Werten des Schweißstromes durch Quotientenbildung U(t)/I(t) ermittelt ist. Die Lücken ergeben sich durch die Strompausen während der Phasenanschnittzeit der Primärspannung am Schweißtransformator.

Fig. 6 zeigt den geglätteten Verlauf des Widerstandes R(t) der nach Gleichung (4) aus den Koeffizienten berechnet ist, die mittels Least-Square-Verfahren aus dem Widerstandsverlauf gemäß Fig. 5 berechnet wurden.

Die mathematische Aufarbeitung der Meßdaten ermöglicht es, die komplexen physikalischen Vorgänge beim Schweißen in für die Auswerteeinheit leicht identifizierbare Signalverläufe, z.B. Vorzeichenwechsel, abzubilden.

Durch Einsatz der erfindungsgemäßen Regelvorrichtung können Punktschweißverbindungen hergestellt werden, die Punkt für Punkt auf die äußeren Randbedingungen durch Regelung der elektrischen Leistung optimal angepaßt sind. Dadurch kann die Anzahl der Schweißpunkte pro Werkstück verringert werden. Ferner können Verletzungen verursachende Grate sowie optische Beeinträchtigungen der Schweißpunkte vermieden werden. Dieses Regelgerät kann darüber hinaus objektive Aussagen über die Güte der Punktschweißverbindung liefern und dokumentieren, es arbeitet "on-line" und automatisch und kann leicht an bestehenden Anlagen und Ausrüstungen adaptiert werden. Die Leistungsfähigkeit des Regelgerätes hängt ab von der Güterelevanz und Präzision der aus den Meßwerten abgeleiteten Datensätze sowie der Fähigkeit des Gerätes, diese Datensätze in Echtzeit zu bestimmen, um entsprechend regelnd eingreifen zu können.

Das quantitative Erfassen der Auswirkung von Schweißeinflußgrößen auf den dynamischen Widerstand als Stell- oder Führungsgröße, das kontinuierliche Erfassen der Meßdaten sowie das gleichzeitige Eliminieren der Störfaktoren ermöglicht eine Echtzeitregulierung innerhalb einer Schweiß-Halbperiode. Wegen der großen Dichte der Informationen und den analysierbaren Charakteristiken genügen unter Verwendung des beschriebenen mathematisch-physikalischen Modells als Meßdaten über die Zeit lediglich die einfach abzugreifende, fehlerkompensierte Elektrodenspannung sowie die z.B. mittels Rogowski-Gürtel erfaßbare Stromstärke des Schweißstromes.

Beim Lichtbogenschweißverfahren kann ein Verlassen der Bandbreitenbereiche ein Verlassen der Schweißnahtsollkurve signalisieren und eine Korrektur der Schweißnahtistkurve auf die Schweißnahtsollkurve bewirken. Die Regelvorrichtung weist vorteilhafterweise eine aus elektronischen Bauteilen in Digitaltechnik, z.B. Halbleiterspeicher, zusammengesetzte Einrichtung auf, die ein Nichteinhalten der Bandbreiten einer oder mehrerer der quantitativen Auswirkungen von Einflußgrößen auf den dynamischen Widerstand des Werkstückes über Display, Drucker, Signallampe oder dergleichen anzeigt oder ausdruckt.

## Patentansprüche

1. Verfahren zur Regelung von Widerstands- oder Lichtbogenschweißvorgängen, bei dem
   a) durch Messen der Stromstärke des Schweißstromes und der Spannung an den Schweißelektroden der Widerstand des zu verschweißenden Werkstücks während des Schweißvorganges bestimmt, abgespeichert und
   b) im Vergleich mit einer empirisch ermittelten Stell- oder Führungsgröße ausgewertet wird und
   c) aus der ermittelten Abweichung der aus der Messung abgeleiteten Größe von der empirisch vorgegebenen Stell- oder Führungsgröße durch Änderung der zuzuführenden Schweißenergie geregelt wird,
   dadurch gekennzeichnet, daß
   d) die Meßwerte mit hoher zeitlicher Auflösung, z.B. mit 50.000 oder 100.000 Meßpunkten pro Sekunde, aufgenommen und abgespeichert werden,
   e) aus diesen Meßwerten von Stromstärke und Spannung on-line die Auswirkung
   der Schweißeinflußgröße Leistung
   oder/und Energie
   oder/und Ladungsmenge
   oder/und Elektrodenspannung
   oder/und Stromstärke
   oder/und Zeit
   auf den dynamischen Widerstand quantitativ (zahlenmäßig) bestimmt wird
   f) und mit den entsprechenden, abgespeicherten Stell- oder Führungsgrößen einzeln oder in Kombination miteinander verglichen wird,
   g) wobei die quantitativ erfaßten Auswirkungen der Schweißeinflußgrößen einer Schweißhalbperiode zur Regelung dieser Schweißhalbperiode oder einer der folgenden Schweißhalbperioden der gleichen Schweißung benutzt werden.

2. Verfahren nach Anspruch 1, dadurch gekennzeichnet, daß Bandbreitenbereiche der quantitativ erfaßten Auswirkungen der Schweißeinflußgrößen auf den dynamischen Widerstand vorgegeben sind und regelnderweise eingehalten werden, wobei ein Verlassen der Bandbreitenbereiche aufgrund zu hoher Leistung ein Herausspritzen des Schmelzgutes und ein Verlassen der Bandbreitenbereiche aufgrund zu niedriger Leistung eine ungenügende Schweißpunktqualität zur Folge hat.

3. Verfahren nach Anspruch 1 oder 2, dadurch gekennzeichnet, daß die durch den Schweißstrom in die Sensorleitung für die Elektrodenspannung hineininduzierte Störung kompensiert wird.

**4.** Verfahren nach Anspruch 3, dadurch gekennzeichnet, daß die notwendige Stärke der Kompensation automatisch für jede Schweißung neu ermittelt und berücksichtigt wird.

**5.** Vorrichtung zur Regelung von Widerstands- oder Lichtbogen-Schweißvorgängen nach dem Verfahren nach Anspruch 1 mit einem Meßwertaufnehmer, einer Auswerteinheit mit elektronischen Bauteilen der Digital- und Analogtechnik und einer Stelleinheit,
dadurch gekennzeichnet, daß der Meßwertaufnehmer die Meßsignale von Elektrodenspannung und Schweißstromstärke quasikontinuierlich der Auswerteinheit zur Verfügung stellt und die Auswerteinheit einen "on-line" auswertenden schnellen Signalprozessor enthält, in dem die Stell- und Führungsgrößen abgespeichert sind und durch Vergleich der aufgenommenen und mathematisch aufgearbeiteten Meßwerte mit den Stell- und Führungsgrößen auswertet und bei Abweichung um eine gewisse Bandbreite Signale an die stelleinheit gibt.

**6.** Vorrichtung nach Anspruch 5, dadurch gekennzeichnet, daß zur Kompensation einer Störung, die durch den Schweißstrom in die Elektrodenspannungssensorleitung hineininduziert wird, eine elektronische Subtraktionsschaltung in Analogtechnik (z.B. unter Verwendung von Operationsverstärkern, Widerständen etc.) vorgesehen ist.

**Claims**

**1.** A process for the regulation of resistance or arc welding procedures, wherein
a) the resistance of the workpiece to be welded is determined during the welding procedure by measurement of the strength of the welding current and the voltage at the welding electrodes, stored and
b) evaluated in comparison with an empirically determined adjustment or control value, and
c) regulated on the basis of the determined deviation of the parameter derived from the measurement operation, from the empirically predetermined adjustment or control value, by alteration of the welding energy to be supplied,
characterised in that
d) the measurement values are recorded and stored with a high level of resolution in respect of time, for example with 50,000 or 100,000 measurement points per second,
e) the effect of the
welding parameter power
and/or energy
and/or charge
and/or electrode voltage
and/or current strength
and/or time
on the dynamic resistance is determined quantitatively (numerically) from said measurement values of current strength and voltage on-line
f) and compared to the corresponding stored adjustment or control values individually or in combination with each other.
g) wherein the quantitatively detected effects of the welding parameters in a welding half-period are used for regulation of said welding half-period or one of the following welding half-periods of the same welding operation.

**2.** A process according to claim 1 characterised in that band width ranges of the quantitatively detected effects of the welding parameters on the dynamic resistance are predetermined and maintained in a regulating mode, wherein departure from the band width ranges due to excessively high power results in the molten material spurting out and a departure from the band width ranges as a result of excessively low power results in inadequate weld spot quality.

**3.** A process according to claim 1 or claim 2 characterised in that the disturbance which is induced into the sensor line for the electrode voltage by the welding current is compensated.

**4.** A process according to claim 3 characterised in that the necessary strength of compensation is automatically re-determined and taken into consideration for each welding operation.

5. Apparatus for the regulation of resistance or arc welding procedures in accordance with the process according to claim 1 comprising a measurement value pick-up, an evaluation unit with electronic components of digital and analog type and an adjustment unit characterised in that the measurement value pick-up makes the measurement signals of electrode voltage and welding current strength available to the evaluation unit quasi-continuously and the evaluation unit contains a fast signal processor which evaluates on-line and in which the adjustment and control values are stored and provides for evaluation by comparison of the recorded and mathematically processed measurement values with the adjustment and control values and in the event of a deviation by a certain band width passes signals to the adjustment unit.

6. Apparatus according to claim 5 characterised in that an electronic subtraction circuit of analog type (for example using operational amplifiers, resistors etc) is provided to compensate for a disturbance which is induced in the electrode voltage sensor line by the welding current.

**Revendications**

1. Procédé de régulation d'opérations de soudage par effet Joule ou de soudage à l'arc, selon lequel :
   a) à l'aide de mesures de l'intensité du courant de soudage et de la tension appliquée aux électrodes de soudage, la résistance de la pièce à souder est déterminée pendant l'opération de soudage, est mise en mémoire,
   b) est analysée en comparaison d'une grandeur de consigne ou de référence déterminée d'une manière empirique et
   c) fait l'objet d'une régulation par modification de l'énergie de soudage à apporter, à partir de l'écart déterminé entre la grandeur déduite des mesures et la grandeur de consigne ou de référence préfixée d'une manière empirique,
      caractérisé en ce que :
   d) les valeurs mesurées sont recueillies et mises en mémoire avec une résolution élevée dans le temps, par exemple avec 50 000 ou 100 000 points de mesure par seconde,
   e) à partir de ces valeurs de mesure de l'intensité du courant et de la tension, on détermine en continu d'une manière quantitative (par des valeurs numériques) l'effet qu'ont sur la résistance dynamique les grandeurs influant sur le soudage que sont :
   la puissance et/ou
   l'énergie et/ou
   la quantité de charge et/ou
   la tension des électrodes et/ou
   l'intensité du courant et/ou
   la durée
   f) et on compare cet effet aux grandeurs correspondantes de consigne ou de référence mises en mémoire, prises individuellement ou en combinaison entre elles,
   g) les effets des grandeurs influant sur le soudage qui ont été déterminés d'une manière quantitative pendant une demi-période du soudage étant utilisés pour la régulation de cette demi-période de soudage ou d'une des demi-périodes de soudage suivantes de la même opération de soudage.

2. Procédé suivant la revendication 1, caractérisé en ce qu'on fixe au préalable des domaines de largeur de bande pour les effets, déterminés d'une manière quantitative, que les grandeurs influant sur le soudage ont sur la résistance dynamique et on maintient ces domaines par régulation, un jaillissement de la matière en fusion se produisant si on quitte les domaines de largeur de bande en raison d'une puissance trop élevée et une qualité insuffisante des points de soudage étant obtenue si on quitte ces domaines de largeur de bande en raison d'une puissance trop faible.

3. Procédé suivant la revendication 1 ou 2, caractérisé en ce qu'on compense la perturbation induite par le courant de soudage dans la ligne du capteur utilisé pour la tension des électrodes.

4. Procédé suivant la revendication 3, caractérisé en ce qu'automatiquement pour chaque soudage, l'intensité nécessaire de la compensation est redéterminée et prise en considération.

5. Dispositif de régulation d'opérations de soudage par effet Joule ou de soudage à l'arc conformément au procédé de la revendication 1, comprenant un collecteur de valeurs de mesure, une unité d'exploitation, comportant des éléments électroniques du type numérique et du type analogique, et une unité de réglage, caractérisé en ce que le collecteur de valeurs de mesure met les signaux de mesure de la tension des électrodes et de l'intensité du courant de soudage d'une manière quasi-continue à la disposition de l'unité d'exploitation et cette unité d'exploitation contient un processeur de signaux à exploitation rapide en continu dans lequel les grandeurs de consigne et de référence sont mises en mémoire et sont exploitées par comparaison des valeurs de mesure recueillies et traitées mathématiquement avec ces grandeurs de consigne et de référence et qui envoie des signaux à l'unité de réglage lorsqu'on s'écarte autour d'une certaine largeur de bande.

6. Dispositif suivant la revendication 5, caractérisé en ce que, pour compenser une perturbation qui est induite par le courant de soudage dans la ligne du capteur de tension des électrodes, il est prévu un circuit électronique de soustraction du type analogique (utilisant par exemple des amplificateurs opérationnels, des résistances, etc.).

FIG.1

FIG.2

9

FIG.3

FIG.4

FIG.5

FIG.6